# FASCICULE DE BREVET EUROPEEN

(11) **EP 0 527 073 B1**
(45) Date de publication et mention de la délivrance du brevet: **01.03.1995**
(21) Numéro de dépôt: 92401969.8
(22) Date de dépôt: 08.07.1992
(51) Int. Cl.: B60R 19/24, F16B 43/00

(54) **Dispositif de réglage du positionnement d'un pare-chocs de véhicule automobile**
Vorrichtung zur Einstellung der Position eines Kraftfahrzeugstossfängers
Position adjusting device for a motor vehicle bumper

(30) Priorité: 31.07.1991 FR 9109757
(43) Date de publication de la demande: 10.02.1993
(73) Titulaire: AUTOMOBILES PEUGEOT, 75116 Paris (FR); AUTOMOBILES CITROEN, 92200 Neuilly-sur-Seine (FR)
(72) Inventeur: Nief, Christian, F-25200 Montbeliard (FR)
(74) Mandataire: Polus, Camille

(56) Documents cités:
- DE-U- 9 000 563
- US-A- 3 830 484
- US-A- 3 836 118
- US-A- 4 160 561

## Description

La présente invention concerne un dispositif de réglage de la position de montage d'un pare-chocs par rapport à une face de référence de la carrosserie d'un véhicule automobile tel que défini dans le préambule de la revendication 1.

On utilise de tels dispositifs, en particulier sur les véhicules modernes dont les pare-chocs comportent deux extrémités libres affleurant chacun un passage de roue.

Lorsqu'un tel pare-chocs est mal positionné, il existe un jeu ou un décalage important entre les extrémités libres du pare-chocs et le passage de roue, ce qui nuit à l'esthétique du véhicule.

Une première solution connue consiste à agencer un dispositif coulissant entre le pare-chocs et la caisse et à bloquer le dispositif dans la position désirée.

Un tel dispositif peut par exemple être constitué d'une vis montée coulissante dans une boutonnière.

Une telle solution présente l'inconvénient dû au fait que lors d'un choc, le pare-chocs peut être déplacé par coulissement du dispositif à l'encontre de l'organe de blocage, les jeux étant alors compromis, ce qui peut être interprété comme un dommage incompatible avec certaines normes en vigueur, aux ETATS-UNIS notamment.

Une seconde solution consiste à positionner correctement un pare-chocs par rapport à la carrosserie en intercalant entre le pare-chocs et la caisse des cales qui sont choisies parmi un ensemble de cales de différentes épaisseurs.

Cette méthode est tributaire du jugement suggestif de l'opérateur et de l'approvisionnement correct de toute la panoplie de cales.

De plus les cales, sans un moyen approprié coûteux, peuvent se perdre entre le poste de réglage et celui d'assemblage.

Cette méthode est longue, coûteuse et trop artisanale pour être utilisée en grande série.

Une troisième solution consiste à intercaler entre le pare-chocs et la caisse un dispositif comportant un premier et un second élément destinés à être en appui l'un contre l'autre par l'intermédiaire d'une face inclinée par rapport à la verticale.

La position du pare-chocs peut être modifiée, avant fixation par déplacement d'un des éléments par rapport à l'autre, ce déplacement provoquant le glissement de la face inclinée de l'élément déplacé par rapport à la face inclinée de l'élément fixe.

Lorsqu'un tel dispositif est utilisé, si le pare-chocs subit un choc horizontal, le dispositif induit des efforts verticaux qui sont considérables et peuvent atteindre plusieurs tonnes pour un choc se produisant à 8 km/heure par exemple.

Ces efforts verticaux induits détruisent les jeux et affleurements existants ce qui nuit à l'esthétique du véhicule.

Pour remédier à ces inconvénients, la présente invention a pour but de fournir un dispositif de réglage du positionnement d'un pare-chocs par rapport à une face de référence de la carrosserie d'un véhicule automobile, le dispositif n'induisant pas d'efforts parasites latéraux ou verticaux lors d'un choc, et n'étant pas tributaire du jugement d'un opérateur.

A cet effet la présente invention a pour objet un dispositif de réglage de la position de fixation d'un pare-chocs sur une structure de véhicule automobile, comportant deux éléments intercalés entre la structure et le pare-chocs, adaptés pour permettre le positionnement du pare-chocs suivant une première direction avant sa fixation sur la structure, l'un des éléments étant déplaçable par rapport à l'autre élément suivant une direction sensiblement perpendiculaire à la première direction pour provoquer le déplacement dudit autre élément suivant la première direction, caractérisé en ce que les surfaces en regard des deux éléments sont étagées.

Selon d'autres caractéristiques :
- la surface étagée de l'élément déplaçable comprend un plus grand nombre d'étages que la surface étagée dudit autre élément ;
- les étages sont perpendiculaires à la première direction ;
- les étages ont la même dimension mesurée perpendiculairement à la première direction ;
- deux étages adjacents sont séparés suivant la première direction par un même espacement ;
- la dimension des étages perpendiculairement à la première direction est plus grande que ledit espacement;
- le dispositif est destiné à être traversé par un organe de fixation du pare-chocs s'étendant suivant la première direction, l'élément déplaçable comportant une lumière oblongue traversée par ledit organe, l'élément étant déplaçable par coulissement perpendiculairement à l'organe sur une distance au moins égale à ladite dimension d'un étage ;
- l'élément est déplaçable par rapport à l'organe sur une distance égale à un multiple de ladite dimension d'un étage.

La présente invention sera mieux comprise à la lecture de la description détaillée qui va suivre, donnée à titre d'exemple, en référence aux dessins annexés sur lesquels :
- La figure 1 est une vue latérale partielle d'un véhicule automobile comportant un pare-chocs intégré mal positionné ;
- la figure 2 est une vue schématique partielle, avec arrachement, d'un véhicule automobile équipé d'un dispositif de réglage du positionnement d'un pare-chocs selon l'invention ;
- la figure 3 est une vue en perspective d'un dispositif selon l'invention ;
- la figure 4 est une vue en élévation représentant la face d'appui du premier élément du dispositif de la figure 3 ;
- la figure 5 est une vue en coupe selon la ligne V-V de la figure 4 d'un premier mode d'agencement du dispositif de la figure 3 entre un pare-chocs et une face de référence de la carrosserie ;
- les figures 6 et 7 sont des vues analogues à la figure 5 représentant respectivement un second et un troisième modes d'agencement du dispositif de la figure 4.

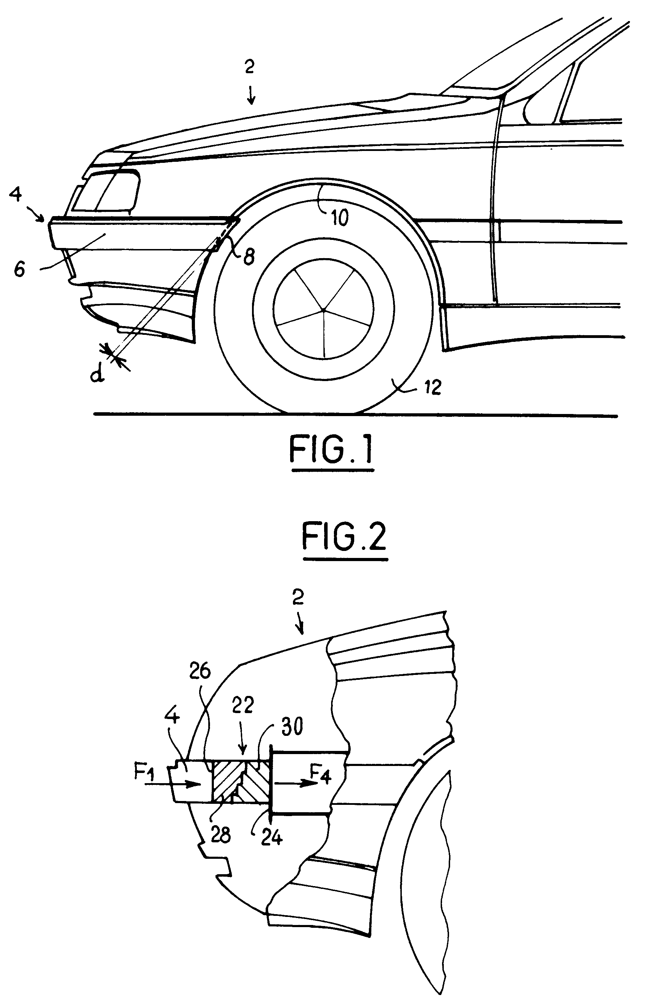

Sur la figure 1 on a représenté un véhicule automobile 2 comportant un pare-chocs intégré 4.

Le pare-chocs 4 comporte des parties d'extrémité 6 s'étendant longitudinalement par rapport au véhicule dont l'extrémité libre 8 est située à proximité du passage de roue 10.

Pour une bonne esthétique du véhicule, l'extrémité 8 du pare-chocs doit être superposée à la partie correspondante du passage de roue 10.

Sur le véhicule 2 représenté à la figure 1 le pare-chocs 4 a été mal positionné, de telle sorte qu'un décalage "d" existe entre le passage de roue et l'extrémité 8 du pare-chocs, ce décalage rompant la continuité du passage de roue 10 et nuisant ainsi à l'esthétique du véhicule.

Sur la figure 2, on a représenté schématiquement un dispositif de réglage 22 selon l'invention, qui est intercalé entre le pare-chocs 4 et une face de référence 24 de la caisse du véhicule.

Le dispositif 22 comporte un premier élément 28 en appui sur une face de fixation 26 du pare-chocs et un second élément 30 en appui sur la face de référence 24.

La face de fixation 26 du pare-chocs et la face de référence 24 de la caisse sont sensiblement parallèles.

Le premier et le second éléments 28, 30 respectivement sont en appui l'un contre l'autre par un face étagée.

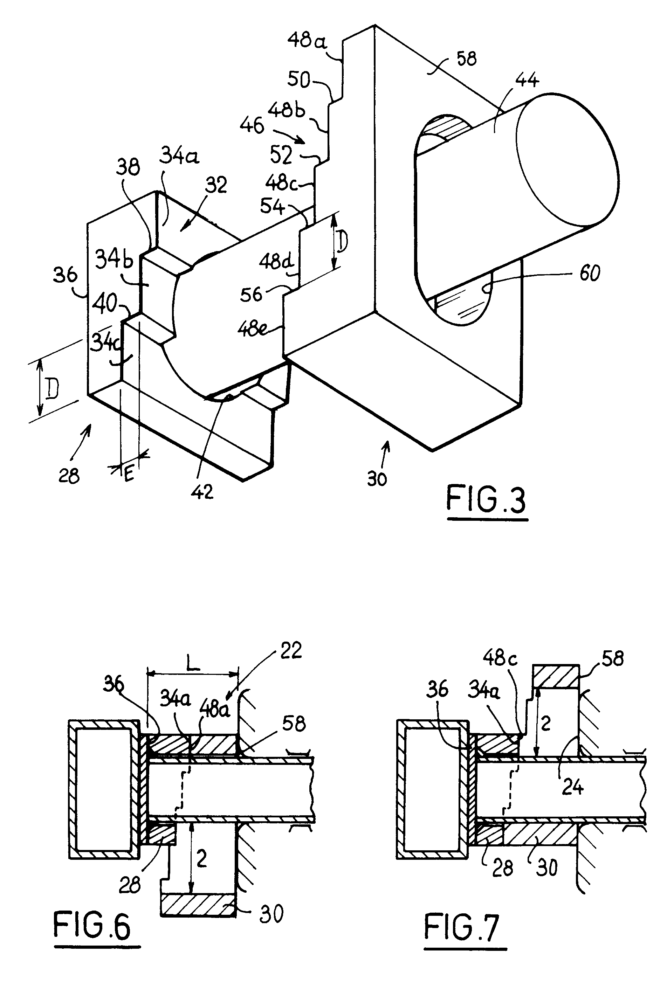

On se reporte maintenant aux figures 3 à 7 des dessins, qui représentent plus en détail le dispositif 22.

Sur la figure 3, le premier élément 28 et le second élément 30 du dispositif selon l'invention sont représentés écartés l'un par rapport à l'autre.

Le premier élément 28 possède une face d'appui 32 étagée comportant trois marches 34a, 34b, 34c s'étendant parallèlement à la face 36 destinée à venir en appui sur le pare-chocs.

Les marches délimitent deux contre-marches 38 et 40 perpendiculaires aux marches.

Chaque marche 34a, 34b, 34c possède la même dimension D mesurée perpendiculairement aux contre-marches.

Les contre-marches 38 et 40 possèdent une même dimension E mesurée perpendiculairement aux marches.

Dans l'exemple représenté, D est supérieur à E pour obtenir un bon appui et une précision suffisante dans le réglage de la position du pare-chocs.

Le premier élément 28 comporte une ouverture traversante 42 perpendiculaire à la face 32 et destinée à être traversée par un support 44 du pare-chocs comme cela sera décrit ultérieurement.

Le second élément 30 comporte une face de positionnement 46 en forme d'escalier dont le profil est complémentaire du profil de la face 32 du premier élément 28.

La face 46 comporte cinq marches 48a, 48b, 48c, 48d, 48e et quatre contre-marches 50, 52, 54, 56.

Les marches possèdent la même dimension D que les marches du premier 28, les contre-marches 50, 56 possédant la dimension E.

La face 58 du second élément 30 opposée à la face 46 est plane et parallèle, en position, à la face 36 du premier élément.

Le second élément 30 comporte une lumière oblongue 60 traversant le second élément perpendiculairement à la face 58.

La plus grande dimension de la lumière 60 mesurée sur la face 58, s'étend dans une direction perpendiculaire aux contre-marches, en étant supérieure à la dimension du support 44 mesuré dans la même direction.

Une telle disposition permet le montage coulissant du second élément 30 autour du support 44 et permet de déplacer le second élément 30 par rapport au support dans la direction perpendiculaire aux contre-marches.

A cet effet la plus grande dimension de la lumière oblongue est égale à la dimension du support 44 mesurée dans la même direction, augmentée dans l'exemple représenté de deux fois la dimension D des marches.

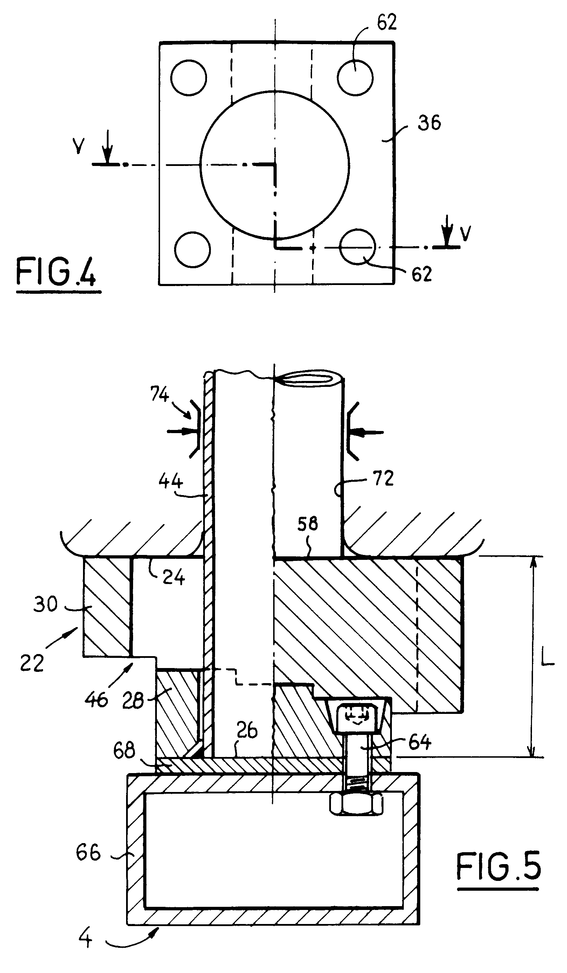

Le premier élément 28 comporte quatre perçages 62 (voir figures 4, 5 et 6) destinés à recevoir des ensembles vis-écrous de fixation 64 sur le pare-chocs 4.

Le support 44 est un tube fixé, par exemple par soudure, sur la face 26, le tube s'étendant perpendiculairement à cette dernière.

Le support 44 traverse le dispositif 22 de la figure 3 et s'étend dans une cavité 72 de la caisse ouvrant sur une face de référence 24.

Un dispositif 74, connu en soi, est destiné à bloquer en position le support 44 dans la cavité 72.

Le premier élément 28 est fixé sur la face de fixation 26.

Pour mettre en place le pare-chocs sur lequel est fixé le premier élément 28, on fait coulisser le second élément 30 le long du support 44 jusqu'à ce que la face de positionnement 46 vienne pratiquement en appui sur le premier élément.

Ensuite le support 44 est introduit dans la cavité 72, en laissant toutefois un espace entre la face 58 du second élément 30 et la face de référence 24.

Par déplacement du second élément 30 perpendiculairement aux contre-marches, et coulissement dudit second élément 30 le long du support 44, on amène une des marches 48a, 48b ou 48c en appui contre la marche 34 du premier élément, puis on fait coulisser l'ensemble pare-chocs et dispositif 22 jusqu'à ce que la face 58 du second élément 30 vienne en appui contre la face de référence 24.

Cette position peut ensuite être éventuellement maintenue par serrage léger du support 44 dans la cavité 72.

L'opérateur examine ensuite le décalage existant entre l'extrémité libre 8 du pare-chocs 4 et le passage de roue 10.

Si l'esthétique ne convient pas, l'opérateur est amené à modifier la position relative du second élément 30 par rapport au premier élément 28.

Sur la figure 7 on constate que l'étage 48a du second élément 30 est en appui sur l'étage 34a du premier élément 28, ce qui par rapport à la position représentée sur la figure 5 correspond à une diminution de l'épaisseur L du dispositif 22, mesurée entre les faces 36 et 58.

Sur la figure 8, on constate par contre que l'étage 48c du second élément 30 est en vis-à-vis de l'étage 34a du premier élément 28.

Une telle disposition par rapport à celle repré-sentée sur la figure 5 permet d'augmenter la distance entre la face 36 et la face 58, entraînant un posi-tionnement différent du pare-chocs par rapport à la face de référence 24 donc une esthétique différente.

On a ainsi réalisé un dispositif dont l'agencement peut être modifié de manière à avoir, après fixation du pare-chocs une esthétique convenable, tout en transmettant les efforts induits par un choc sur le pare-chocs uniquement dans la direction longitudinale du véhicule (voir flèche F4 de la figure 2).

## Revendications

1. Dispositif (22) de réglage de la position de fixation d'un pare-chocs (4) sur une structure de véhicule automobile, comportant deux éléments (28, 30) intercalés entre la structure et le pare-chocs, adaptés pour permettre le positionnement du pare-chocs suivant une première direction avant sa fixation sur la structure, l'un des éléments (30) étant déplaçable par rapport à l'autre élément suivant une direction sensiblement perpendiculaire à la première direction pour provoquer le déplacement dudit autre élément (28) suivant la première direction, caractérisé en ce que les surfaces (32, 46) en regard des deux éléments sont étagées.

2. Dispositif selon la revendication 1, caractérisé en ce que la surface étagée (46) de l'élément déplaçable (30) comprend un plus grand nombre d'étages que la surface étagée dudit autre élément.

3. Dispositif selon la revendication 1 ou 2, caractérisé en ce que les étages sont perpendiculaires à la première direction.

4. Dispositif selon la revendication 3, caractérisé en ce que les étages ont la même dimension (D) mesurée perpendiculairement à la première direction.

5. Dispositif selon la revendication 3 ou 4, caractérisé en ce que deux étages adjacents sont séparés suivant la première direction par un même espacement (E).

6. Dispositif selon la revendication 5, caractérisé en ce que la dimension (D) des étages perpendiculairement à la première direction est plus grande que ledit espacement (E).

7. Dispositif selon l'une quelconque des revendications précédentes, caractérisé en ce que lorsqu'il est destiné à être traversé par un organe de fixation (44) du pare-chocs s'étendant suivant la première direction, l'élément déplaçable (30) comporte une lumière oblongue (60) traversée par ledit organe, l'élément étant déplaçable par coulissement perpendiculairement à l'organe (44) sur une distance au moins égale à ladite dimension (D) d'un étage.

8. Dispositif selon la revendication 7, caractérisé en ce que l'élément (30) est déplaçable par rapport à l'organe (44) sur une distance égale à un multiple de ladite dimension (D) d'un étage.

## Claims

1. A device (22) to adjust the position at which a bumper (4) is secured on the body of a motor vehicle, comprising two members (28, 30) interposed between the vehicle body and the bumper and adapted so as to allow positioning of the bumper in a first direction before it is secured to the body, one (30) of the members being displaceable in relation to the other member in a direction substantially perpendicular to the first direction, to bring about displacement of the said other member (28) in the first direction, **characterised in that** the opposed surfaces (32, 46) of the two members are stepped.

2. A device in accordance with claim 1, **characterised in that** the stepped surface (46) of the displaceable member (30) has a larger number of steps than the stepped surface of the other member.

3. A device in accordance with claim 1 or 2, **characterised in that** the steps are perpendicular to the first direction.

4. A device in accordance with claim 3, **characterised in that** the steps have the same dimension (D) measured perpendicularly to the first direction.

5. A device in accordance with claim 3 or 4, **characterised in that** two adjacent steps are separated in the first direction by the same spacing (E).

6. A device in accordance with claim 5, **characterised in that** the dimension (D) of the steps, perpendicular to the first direction, is larger than the said spacing (E).

7. A device in accordance with any one of the preceding claims, **characterised in that** when the displaceable member (30) is to be traversed by a bumper-securing member (44) extending in the first direction, it comprises an oblong slot (60) traversed by the said member (44), the member (30) being displaceable by sliding perpendicularly to the member (44) over a distance at least equal to the said dimension (D) of one step.

8. A device in accordance with claim 7, **characterised in that** the member (30) is displaceable in relation to the member (44) over a distance equal to a multiple of the said dimension (D) of one step.

## Patentansprüche

1. Vorrichtung (22) zum Einstellen der Befestigungsposition eines Stoßfängers (4) auf einer Kraftfahrzeugstruktur, mit zwei Elementen (28, 30), die zwischen die Struktur und die Stoßfänger geschaltet sind, dazu ausgelegt, die Positionierung des Stoßfängers entlang einer ersten Richtung vor seiner Befestigung an der Struktur zu ermöglichen, wobei das eine Element (30) in bezug auf das andere Element entlang einer Richtung verlagerbar ist, die im wesentlichen senkrecht zu der ersten Richtung ist, um die Verlagerung des anderen Elementes (28) entlang der ersten Richtung herbeizuführen, dadurch gekennzeichnet, daß die gegenüberliegenden Flächen (32, 46) der zwei Elemente abgestuft sind.

2. Vorrichtung nach Anspruch 1, dadurch gekennzeichnet, daß die abgestufte Fläche (46) des verlagerbaren Elementes (30) eine größere Anzahl von Stufen als die abgestufte Fläche des anderen Elementes umfaßt.

3. Vorrichtung nach Anspruch 1 oder 2, dadurch gekennzeichnet, daß die Stufen zu der ersten Richtung senkrecht liegen.

4. Vorrichtung nach Anspruch 3, dadurch gekennzeichnet, daß die Stufen dieselbe Abmessung (D) haben, gemessen senkrecht zu der ersten Richtung.

5. Vorrichtung nach Anspruch 3 oder 4, dadurch gekennzeichnet, daß zwei benachbarte Stufen entlang der ersten Richtung durch den gleichen Abstand (E) getrennt sind.

6. Vorrichtung nach Anspruch 5, dadurch gekennzeichnet, daß die Abmessung (D) der Stufen senkrecht zu der ersten Richtung größer als der genannte Abstand (E) ist.

7. Vorrichtung nach einem der vorangehenden Ansprüche, dadurch gekennzeichnet, daß, da es dazu bestimmt ist, von einem Befestigungsorgan (44) des Stoßfängers durchquert zu werden, das sich entlang der ersten Richtung erstreckt, das verlagerbare Element (30) eine verlängerte Öffnung (60) aufweist, die von dem Organ durchquert wird, wobei das Element durch Gleiten senkrecht zu dem Organ (44) verlagerbar ist, über eine Entfernung, die wenigstens gleich der Abmessung (D) einer Stufe ist.

8. Vorrichtung nach Anspruch 7, dadurch gekennzeichnet, daß das Element (30) in bezug auf das Organ (44) über einen Abstand verlagerbar ist, der gleich einem Vielfachen der Abmessung (D) einer Stufe ist.
